# DEMANDE DE BREVET EUROPEEN

(11) **EP 2 345 606 A1**
(43) Date de publication de la demande: **20.07.2011**
(21) Numéro de dépôt: 11150216.7
(22) Date de dépôt: 05.01.2011
(51) Int. Cl.: B65G 15/00

(54) **Dispositif de levage de bande pour un convoyeur**

(30) Priorité: 14.01.2010 FR 1050219
(71) Demandeur: Brunone, René, 27950 Saint Marcel (FR)
(72) Inventeur: Brunone, René, 27950 Saint Marcel (FR)
(74) Mandataire: Kohn, Philippe

(57) **Abrégé**

L'invention propose un dispositif (10) de levage de bande pour un convoyeur (12) comportant au moins une bande (14) dont au moins une zone (16) repose sur au moins un support (18) par l'intermédiaire d'au moins un rouleau (22) transversal, ledit rouleau (22) étant reçu de manière démontable dans un châssis (20) du support (18), qui comporte au moins une barre (24) transversale adjacente et parallèle audit rouleau (22), **caractérisé en ce qu'**il comporte au moins un patin (28) de soulèvement de la bande (14) mobile par rapport à un élément d'appui (30) comportant un moyen (32) de fixation destiné à permettre au moins l'appui du dispositif (10) sur la barre (24) du châssis (20), ledit patin (28) étant susceptible d'être mû par un moyen d'actionnement entre une position rapprochée dans laquelle ledit patin (28) est rapproché de l'élément d'appui (30) et une position écartée dans laquelle ledit patin (28) est écarté de l'élément d'appui (30) pour soulever la bande (14) du rouleau (22).

## Description

L'invention concerne un dispositif de levage de bande pour un convoyeur à bande.

L'invention concerne plus particulièrement un dispositif de levage de bande pour un convoyeur comportant au moins une bande dont au moins une zone repose sur au moins un support par l'intermédiaire d'au moins un rouleau d'axe transversal par rapport à la direction longitudinale de défilement de la bande, ledit rouleau étant reçu de manière démontable dans un châssis du support, et ledit châssis comportant au moins une barre transversale adjacente et parallèle audit rouleau.

Les documents US-B1-6.244.428 et US-A1-2008/0060909 décrivent chacun un dispositif de levage de bande destiné à soulever la bande d'un convoyeur qui est constitué essentiellement par une traverse inférieure prenant appui sur des longerons structurels inférieurs du convoyeur, et par une traverse supérieure équipée de patins de soulèvement d'inclinaison adaptée à l'inclinaison de la bande, avec interposition de vérins mécaniques entre les deux traverses afin de provoquer un soulèvement de la bande, notamment dans le but de permettre un entretien ou un remplacement des rouleaux du convoyeur.

Un tel dispositif est d'un volume et d'une masse importante et il nécessite de plus de pouvoir prendre appui sur des longerons inférieurs du convoyeur au droit des rouleaux à entretenir.

Par ailleurs, un tel système ne peut pas être utilisé pour soulever la bande au droit de rouleaux autres que des rouleaux agencés en position inférieure, et notamment pas pour des bandes associées à des rouleaux situés en position verticale ou haute.

Le document US-B1-6.109.428 décrit un dispositif reposant sur le même principe, comportant deux traverses inférieure et supérieure reliées entre elles par des vérins verticaux alimentés par une pompe hydraulique.

Ce dispositif présente les mêmes inconvénients que ceux précédemment cités.

L'invention propose de remédier à cet inconvénient en proposant un dispositif modulaire présentant une grande souplesse et facilité d'utilisation, et permettent pour l'intervention individualisée sur une partie de la bande localisée au droit d'un rouleau, quelle que soit la position de ce dernier.

Ceci est rendu possible par le fait que le dispositif selon l'invention comporte des moyens permettant de prendre appui sur une barre transversale adjacente et parallèle au rouleau à traiter, et ne nécessite donc pas de prendre appui sur une traverse inférieure du châssis.

Dans ce but, l'invention propose un dispositif du type décrit précédemment, **caractérisé en ce qu'**il comporte au moins un patin de soulèvement de la bande qui est monté mobile par rapport à un élément d'appui comportant un moyen de fixation sur la barre du châssis, ledit moyen de fixation étant destiné à permettre au moins l'appui du dispositif sur la barre du châssis, et qui est susceptible d'être mû par un moyen d'actionnement entre une position rapprochée dans laquelle ledit patin est rapproché de l'élément d'appui et une position écartée dans laquelle ledit patin est écarté de l'élément d'appui pour soulever la bande du rouleau.

Selon d'autres caractéristiques de l'invention :
- l'élément d'appui comporte un moyen de fixation constitué d'un moyen de liaison de type encastrement avec la barre, et le patin est monté mobile en coulissement par rapport à l'élément d'appui suivant une direction sensiblement perpendiculairement à la surface de la bande,
- l'élément d'appui s'étend suivant la direction longitudinale et il comporte à une première extrémité longitudinale un moyen de fixation constitué d'un moyen de liaison de type ponctuel ou linéaire avec la barre, le patin est articulé à une seconde extrémité opposée de l'élément d'appui par l'intermédiaire d'un pivot d'axe transversal,

- le moyen de liaison de type ponctuel ou linéaire avec la barre comporte au moins un bec et/ou un crochet qui est agencé à l'extrémité de l'élément d'appui et qui est destiné à coopérer avec la barre,
- l'élément d'appui est conformé sensiblement en une gouttière longitudinale dans une cavité de laquelle le patin est entièrement reçu dans sa position rapprochée et hors de laquelle le patin fait au moins en partie saillie dans sa position écartée,
- la gouttière présente une section en forme de "U" délimitée par une paroi de fond longitudinale et au moins deux ailes latérales perpendiculaires à ladite paroi de fond dont des premières extrémités sont découpées en bec ou en crochet, et dont des secondes extrémités comportent des perçages en regard recevant axe traversant le patin et formant le pivot d'articulation dudit patin,
- la paroi de fond s'étend entre les secondes extrémités et une partie intermédiaire des ailes, et la première extrémité de chaque aile latérale, qui s'étend au-delà de ladite partie intermédiaire, est doublée au moins sur une partie de sa longueur par une paroi de renfort conformée en bec ou en crochet,
- le moyen d'actionnement comporte au moins un vérin à soufflet qui est interposé entre la paroi de fond et le patin, des faces opposées d'extrémité dudit vérin étant notamment fixées par vissage sur ladite paroi de fond et sous ledit patin,
- le moyen d'actionnement comporte au moins un vérin comportant une tige dont une première extrémité est liée au patin,
- la première extrémité de la tige du vérin est articulée sous le patin par l'intermédiaire d'une liaison de type pivot d'axe transversal,
- la tige du vérin s'étend entre les parties intermédiaires et les premières extrémités des ailes de l'élément d'appui,
- un corps du vérin est articulé par rapport à l'élément d'appui, par l'intermédiaire d'une liaison de type pivot d'axe transversal,
- les ailes latérales de l'élément d'appui comportent deux oreilles qui sont agencées entre les parties intermédiaires et les premières extrémités des ailes, qui sont agencées transversalement en regard l'une de l'autre, et dont des perçages en regard sont destinés à recevoir des axes transversaux d'articulation du corps du vérin sur l'élément d'appui,
- le vérin est un vérin à air comprimé dont la tige comporte une seconde extrémité solidaire d'un piston monté mobile dans une chambre qui est susceptible d'être alimentée en air par une source d'air portable, notamment une pompe manuelle ou une bonbonne d'air pressurisé,
- le vérin est un vérin mécanique dont la tige comporte une seconde extrémité susceptible d'être manuellement ou bien électriquement.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective, côté rouleau du support, d'un dispositif de levage en cours de levage d'une bande au droit d'un rouleau central selon la position écartée du patin ;
- la figure 2 est une vue en perspective, côté barre du support, d'un dispositif de levage en cours de levage d'une bande au droit d'un rouleau central selon la position écartée du patin ;
- la figure 3 est une vue en perspective, côté barre du support, d'un dispositif de levage en cours de levage d'une bande au droit d'un rouleau latéral selon la position écartée du patin ;
- la figure 4 est une vue de côté d'un dispositif de levage selon l'invention dans la position rapprochée du patin,
- la figure 5 est une vue de côté d'un dispositif de levage selon l'invention dans la position écartée du patin,

Dans la description qui va suivre, des chiffres de référence identiques désignent des pièces identiques ou ayant des fonctions similaires.

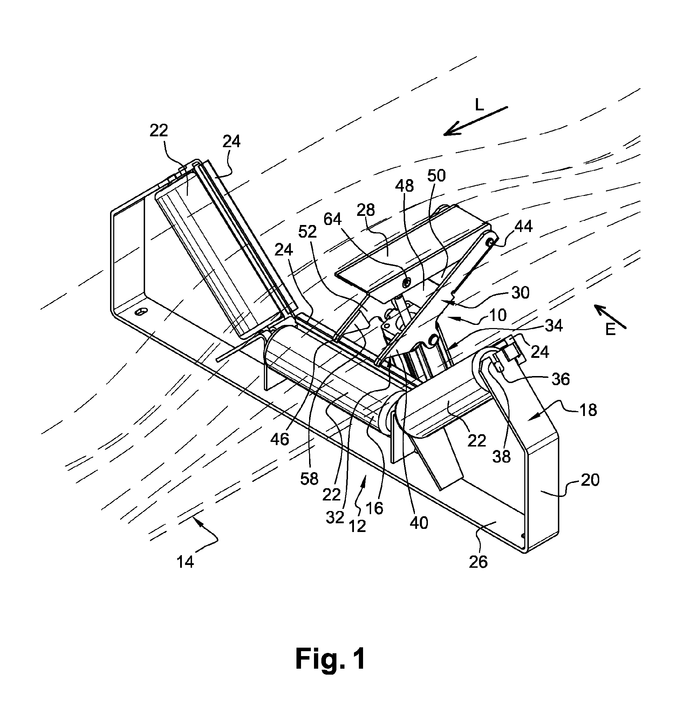

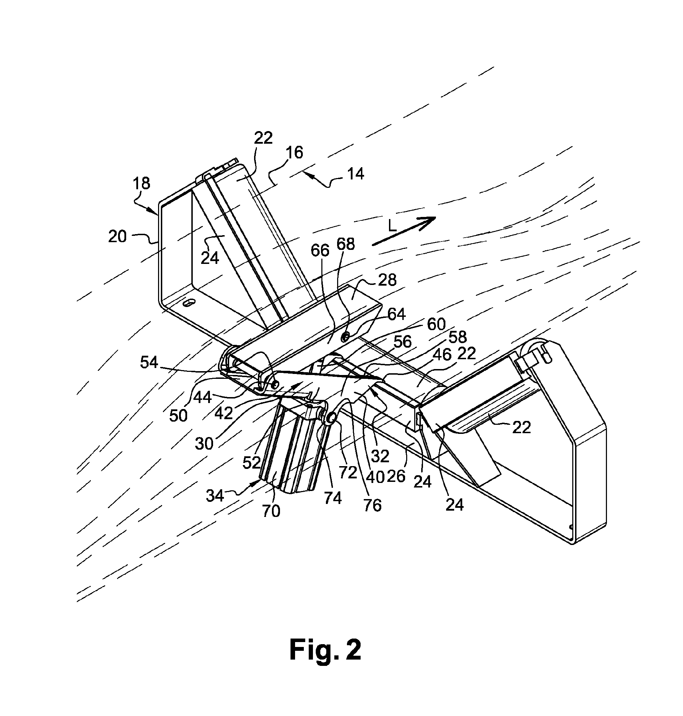

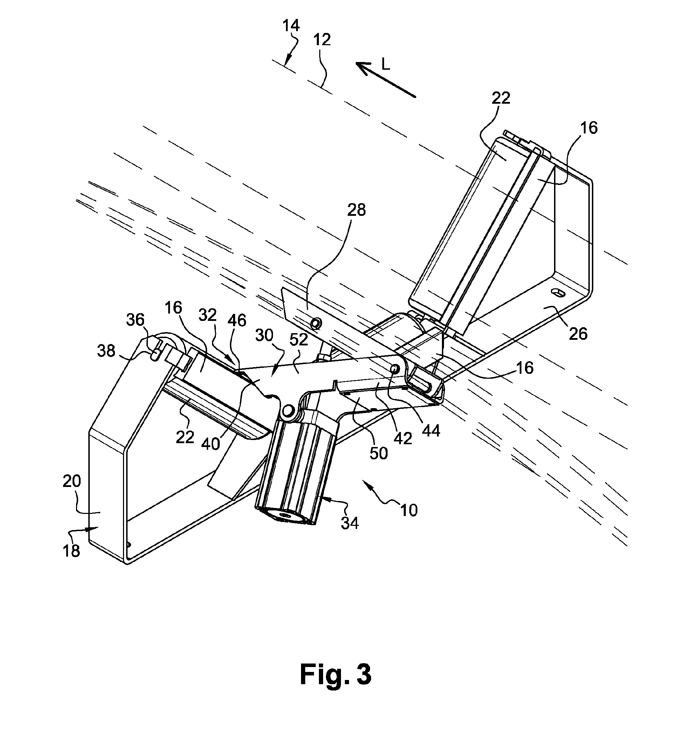

On a représenté sur les figures 1 à 5 un dispositif 10 de levage de bande pour un convoyeur 12 comportant au moins une bande 14 dont au moins une zone 16 repose sur un support 18 par l'intermédiaire d'au moins un rouleau 22 d'axe transversal par rapport à la direction "L" longitudinale de défilement de la bande 14. Chaque rouleau 22 est reçu de manière démontable dans un châssis 20 du support 18, et le châssis 20 du support 18 comporte au moins une barre transversale 24 adjacente et parallèle à chaque rouleau 22.

Sur les figures on a représenté un support 18 comportant un rouleau 22 horizontal et deux rouleaux 22 inclinés par rapport à la direction horizontale, mais il sera compris que cette disposition n'est pas limitative de l'invention. Le dispositif 10 de levage de bande qui va être décrit dans la suite de la présente description peut être utilisé avec tout type de support 18 comportant au moins un rouleau 22, pourvu que le châssis 20 du support 18 comporte au moins une barre transversale 24 adjacente et parallèle à chaque rouleau 22.

On connaît de nombreux types de dispositifs de levage de bande. Ces dispositifs, généralement assez lourds et encombrants, comportent une traverse inférieure (non représentée) prenant appui sur le sol sur lequel repose le châssis 20 ou sur les longerons structurels inférieurs 26 du châssis 20 du convoyeur, et une traverse supérieure (non représentée) équipée de patins (non représentés) de soulèvement d'inclinaison adaptée à l'inclinaison de la bande, avec interposition de vérins mécaniques entre les deux traverses afin de provoquer un soulèvement de la bande.

Un tel dispositif de levage est particulièrement malaisé à manipuler.

L'invention remédie à cet inconvénient en proposant un dispositif 10 de levage portable permettant de soulever la bande 14 indépendamment et localement au droit de chaque rouleau 22.

Dans ce but, conformément à l'invention, le dispositif 10 comporte au moins un patin 28 de soulèvement de la bande 14 qui est monté mobile par rapport à un élément d'appui 30 comportant un moyen 32 de fixation sur la barre 16 du châssis 20.

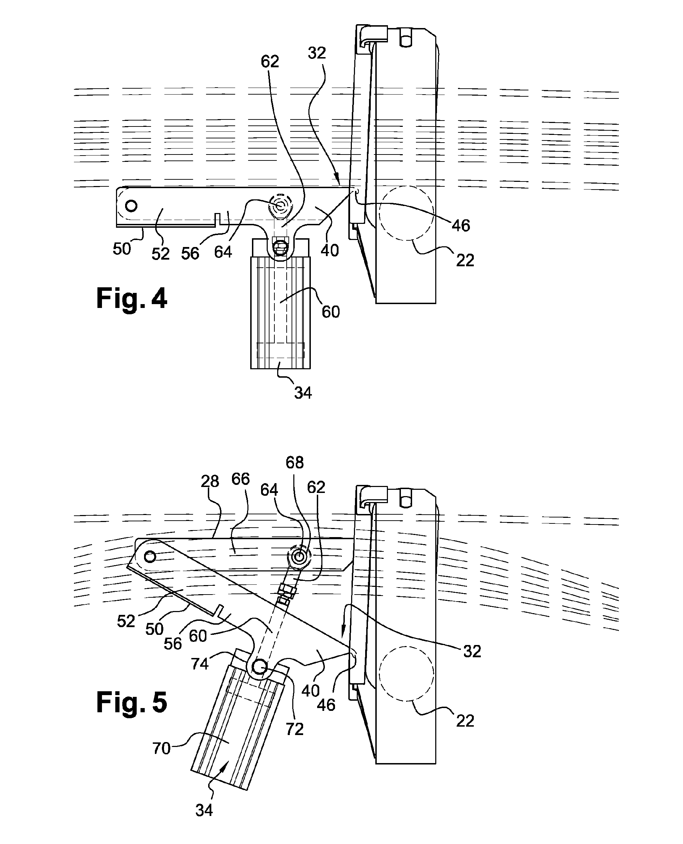

En particulier, le moyen 32 de fixation est destiné à permettre au moins l'appui du dispositif 10 sur la barre 24 du châssis 20, et le patin 28 est susceptible d'être mû par un moyen d'actionnement 34 entre une position rapprochée, représentée à la figure 4, dans laquelle le patin 28 est rapproché de l'élément d'appui 30 et une position écartée, représentée aux figures 1 à 3 et 5, dans laquelle ledit patin 28 est écarté de l'élément d'appui 30 pour soulever la bande 14 du rouleau 22.

Ainsi, une fois la bande 14 soulevée du rouleau 22, un opérateur peut effectuer à loisir toutes les opérations de maintenance sur ledit rouleau 22, comme représenté à la figure 5.

En particulier, comme l'illustre la figure 1, chaque rouleau 22 comporte un axe 36 qui est reçu dans une lumière 38 en forme de "U" débouchant vers l'extérieur, et par exemple vers une zone supérieure du châssis 20, suivant une direction d'extraction représentée par la flèche "E". Aussi le rouleau 20 peut il être facilement extrait du châssis 20 du support 18 dès lors qu'il n'est plus sollicité par la bande 14.

Selon un premier mode de réalisation de l'invention (non représenté) l'élément d'appui 30 pourrait comporter un moyen de fixation constitué d'un moyen de liaison de type encastrement avec la barre 24, et le patin 28 pourrait être monté mobile en coulissement par rapport à l'élément d'appui 30 suivant une direction sensiblement perpendiculaire à la surface de la bande 14.

Toutefois, dans le mode de réalisation préféré de l'invention, l'élément d'appui 30 s'étend suivant la direction longitudinale "L" et il comporte à une première extrémité longitudinale 40 un moyen 32 de fixation constitué d'un moyen de liaison de type ponctuel ou linéaire avec la barre 24. Le patin 28 est, quand à lui, articulé à une seconde extrémité 42 opposée de l'élément d'appui 30 par l'intermédiaire d'un pivot d'axe transversal 44.

Cette configuration permet l'installation du dispositif 10 entre la barre 24 et la bande 14, puis son coincement entre la bande 14 et la barre 24 dès lors que le patin 28 est actionné, le frottement du patin 28 sur la bande 14 et la tension de la bande 14 suffisant à maintenir le patin 28 immobile, comme représenté à la figure 5.

Pour réaliser le moyen de liaison ponctuel ou linéaire formant le moyen de fixation 32, le moyen de liaison comporte au moins un bec et/ou un crochet 46 qui est agencé à l'extrémité 40 de l'élément d'appui 28 et qui est destiné à coopérer avec la barre 24.

Dans le mode de réalisation préféré de l'invention, l'élément d'appui 30 est conformé sensiblement en une gouttière longitudinale dans une cavité 48, visible sur la figure 1, dans laquelle le patin 28 est entièrement reçu dans sa position rapprochée de la figure 4, et hors de laquelle le patin 28 fait au moins en partie saillie dans sa position écartée de la figure 5.

Plus particulièrement, la gouttière présente une section en forme de "U" délimitée par une paroi 50 de fond longitudinale et au moins deux ailes latérales 52 perpendiculaires à ladite paroi de fond 50 dont des premières extrémités 40 sont découpées en bec ou en crochet 46, et dont des secondes extrémités 42 comportent des perçages 54 en regard recevant l'axe 44 traversant le patin 28 et formant le pivot d'articulation dudit patin 28.

Comme on le verra par la suite, le moyen d'actionnement 34 du patin 28 s'étend en partie dans la cavité 48, ceci afin de proposer un dispositif 10 de compacité maximale. Pour cette raison la paroi de fond 50 ne s'étend que sur une partie de la longueur de l'élément d'appui 28.

Plus particulièrement, la paroi de fond 50 s'étend entre les secondes extrémités 42 et une partie intermédiaire 56 des ailes 52.

De ce fait, afin que la première extrémité 40 de chaque aile 52 latérale qui s'étend au-delà de ladite partie intermédiaire 54 et qui comporte le bec ou crochet 46 présente une rigidité suffisante, ladite première extrémité 40 est doublée au moins sur une partie de sa longueur par une paroi 58 de renfort conformée elle aussi en bec ou en crochet.

Dans le mode de réalisation préféré de l'invention, le moyen d'actionnement 34 comporte au moins un vérin à soufflet (non représenté) qui est interposé entre la paroi de fond 50 et le patin 28. En particulier, des faces opposées d'extrémité du vérin sont par exemple fixées par vissage sur ladite paroi de fond 50 et sous ledit patin 28. Lors de son actionnement, le vérin à soufflet se déploie selon une courbure associée à l'angle d'ouverture formé entre la paroi de fond 50 et le patin 28.

Le moyen d'actionnement 34 peut aussi comporter au moins un vérin 34 comportant une tige 60 dont une première extrémité 62 est liée au patin 28.

Par exemple, comme l'illustre la figure 5 de manière non limitative de l'invention, la première extrémité 62 de la tige 60 du vérin 34 est articulée sous le patin par l'intermédiaire d'une liaison de type pivot d'axe 64 transversal.

A cet effet, le patin comporte lui aussi deux ailes latérales 66 dans lesquelles sont pratiqués des perçages 68 en regard destinées à recevoir l'axe 64 qui traverse l'extrémité 62 de la tige 60 du vérin 34.

Comme il a été expliqué précédemment, le moyen d'actionnement 34 du patin 28 s'étend en partie dans la cavité 48. A cet effet, la tige 60 du vérin 34 s'étend entre les parties intermédiaires 56 et les premières extrémités 40 des ailes 52 de l'élément d'appui 30.

Par ailleurs, un corps 70 du vérin est articulé par rapport à l'élément d'appui, par l'intermédiaire d'une liaison de type pivot d'axe 72 transversal.

A cet effet, les ailes latérales 52 de l'élément d'appui 30 comportent deux oreilles 74 qui sont agencées entre les parties intermédiaires 56 et les premières extrémités 40 des ailes 52, qui sont agencées transversalement en regard l'une de l'autre, et dont des perçages 76 en regard sont destinés à recevoir des axes 72 transversaux d'articulation du corps 70 du vérin 34 sur l'élément 30 d'appui.

Plusieurs modes de réalisation du vérin 34 peuvent être envisagés.

De préférence, le vérin 34 est un vérin à air comprimé dont la tige 60 comporte une seconde extrémité (non représenté) solidaire d'un piston monté mobile dans une chambre (non représentés) qui est susceptible d'être alimentée en air par une source d'air portable, notamment une pompe manuelle ou une bonbonne d'air pressurisé.

Cette configuration permet de disposer d'un vérin entièrement autonome, permettant une intervention sur des sites d'accès difficile.

En variante (non représentée) le vérin 34 peut être est un vérin mécanique dont la tige comporte une seconde extrémité susceptible d'être entraînée manuellement, par exemple par l'intermédiaire d'un mécanisme de réduction, ou bien électriquement par l'intermédiaire d'un moteur électrique.

Dans ce dernier cas, il sera préféré un moteur électrique fonctionnant sur accumulateurs, de manière que le dispositif 10 soit portable.

L'invention permet donc de disposer d'un dispositif 10 de soulèvement de bande léger et portable, pouvant être utilisé rapidement aux fins de maintenance d'un rouleau 22 particulier sur un des supports 18 d'un convoyeur 12.

## Revendications

1. Dispositif (10) de levage de bande pour un convoyeur (12) comportant au moins une bande (14) dont au moins une zone (16) repose sur au moins un support (18) par l'intermédiaire d'au moins un rouleau (22) d'axe transversal par rapport à la direction (L) longitudinale de défilement de la bande (14), ledit rouleau (22) étant reçu de manière démontable dans un châssis (20) du support (18), et ledit châssis (20) comportant au moins une barre (24) transversale adjacente et parallèle audit rouleau (22),
**caractérisé en ce qu'**il comporte au moins un patin (28) de soulèvement de la bande (14) qui est monté mobile par rapport à un élément d'appui (30) comportant un moyen (32) de fixation sur la barre (24) du châssis (20), ledit moyen (32) de fixation étant destiné à permettre au moins l'appui du dispositif (10) sur la barre (24) du châssis (20), ledit patin (28) étant susceptible d'être mû par un moyen d'actionnement entre une position rapprochée dans laquelle ledit patin (28) est rapproché de l'élément d'appui (30) et une position écartée dans laquelle ledit patin (28) est écarté de l'élément d'appui (30) pour soulever la bande (14) du rouleau (22).

2. Dispositif (10) de levage de bande selon la revendication précédente, **caractérisé en ce que** l'élément d'appui (30) comporte un moyen (32) de fixation constitué d'un moyen de liaison de type encastrement avec la barre (24), et **en ce que** le patin (28) est monté mobile en coulissement par rapport à l'élément d'appui (30) suivant une direction sensiblement perpendiculaire à la surface de la bande (14).

3. Dispositif (10) de levage de bande selon la revendication 1, **caractérisé en ce que** l'élément (30) d'appui s'étend suivant la direction longitudinale (L) et **en ce qu'**il comporte à une première extrémité longitudinale (40) un moyen (32) de fixation constitué d'un moyen de liaison de type ponctuel ou linéaire avec la barre, et **en ce que** le patin (28) est articulé à une seconde extrémité (42) opposée de l'élément d'appui par l'intermédiaire d'un pivot d'axe transversal (44).

4. Dispositif (10) de levage de bande selon la revendication précédente, **caractérisé en ce que** le moyen de liaison de type ponctuel ou linéaire avec la barre (24) comporte au moins un bec et/ou un crochet (46) qui est agencé à l'extrémité de l'élément d'appui (30) et qui est destiné à coopérer avec la barre (24).

5. Dispositif (10) de levage selon l'une des revendications précédentes, **caractérisé en ce que** l'élément d'appui (30) est conformé sensiblement en une gouttière longitudinale dans une cavité (48) de laquelle le patin (28) est entièrement reçu dans sa position rapprochée et hors de laquelle le patin (28) fait au moins en partie saillie dans sa position écartée.

6. Dispositif (10) selon la revendication précédente prise en combinaison avec la revendication 4, **caractérisé en ce que** la gouttière présente une section en forme de U délimitée par une paroi (50) de fond longitudinale et au moins deux ailes latérales (52) perpendiculaires à ladite paroi (50) de fond dont des premières extrémités (40) sont découpées en bec ou en crochet (46), et dont des secondes extrémités (42) comportent des perçages (54) en regard recevant un axe (44) traversant le patin (28) et formant le pivot d'articulation dudit patin (28).

7. Dispositif (10) selon la revendication précédente, **caractérisé en ce que** la paroi (50) de fond s'étend entre les secondes extrémités (42) et une partie intermédiaire (56) des ailes (52), et **en ce que** la première extrémité (40) de chaque aile latérale qui s'étend au-delà de ladite partie intermédiaire (56) est doublée au moins sur une partie de sa longueur par une paroi (58) de renfort conformée en bec ou en crochet.

8. Dispositif (10) selon l'une quelconque des revendications précédentes, **caractérisé en ce que** le moyen d'actionnement comporte au moins un vérin à soufflet qui est interposé entre la paroi de fond (50) et le patin (28), des faces opposées d'extrémité dudit vérin étant notamment fixées par vissage sur ladite paroi de fond (50) et sous ledit patin (28).

9. Dispositif (10) selon l'une quelconque des revendications 1 à 7, **caractérisé en ce que** le moyen d'actionnement comporte au moins un vérin (34) comportant une tige (60) dont une première extrémité (62) est liée au patin (28).

10. Dispositif (10) selon la revendication précédente prise en combinaison avec la revendication 6, **caractérisé en ce que** :
- la première extrémité (62) de la tige (60 du vérin est articulée sous le patin (28) par l'intermédiaire d'une liaison de type pivot d'axe transversal (64),
- la tige (60) du vérin s'étend entre les parties intermédiaires (56) et les premières extrémités (40) des ailes (52) de l'élément d'appui (30),
- un corps (70) du vérin est articulé par rapport à l'élément d'appui (30), par l'intermédiaire d'une liaison de type pivot d'axe transversal (72).

11. Dispositif (10) selon la revendication précédente, **caractérisé en ce que** les ailes latérales (52) de l'élément d'appui comportent deux oreilles (74) qui sont agencées entre les parties intermédiaires (56) et les premières extrémités (40) des ailes (52), qui sont agencées transversalement en regard l'une de l'autre, et dont des perçages (76) en regard sont destinés à recevoir des axes (72) transversaux d'articulation du corps (70) du vérin (34) sur l'élément d'appui (30).

12. Dispositif (10) selon l'une des revendications 9 à 11, **caractérisé en ce que** le vérin (34) est un vérin à air comprimé dont la tige (60) comporte une seconde extrémité solidaire d'un piston monté mobile dans une chambre qui est susceptible d'être alimentée en air par une source d'air portable, notamment une pompe manuelle ou une bonbonne d'air pressurisé.

13. Dispositif (10) selon l'une des revendications 9 à 11, **caractérisé en ce que** le vérin (34) est un vérin mécanique dont la tige (60) comporte une seconde extrémité susceptible d'être entraînée manuellement ou bien électriquement.
